# EUROPÄISCHE PATENTANMELDUNG

(11) **EP 0 970 921 A2**
(43) Veröffentlichungstag der Anmeldung: **12.01.2000**
(21) Anmeldenummer: 99111636.9
(22) Anmeldetag: 16.06.1999
(51) Int. Cl.: C02F 3/10, B01J 19/32

(54) **Verfahren zur Herstellung eines Festbettkörpers**

(30) Priorität: 10.07.1998 DE 19831029; 21.08.1998 DE 19838009
(71) Anmelder: Norddeutsche Seekabelwerke GmbH, 26954 Nordenham (DE)
(72) Erfinder: Bittner, Hans-Jürgen, 26954 Nordenham (DE)
(74) Vertreter: Möller, Friedrich, Dipl.-Ing.

(57) **Zusammenfassung**

Festbettkörper (10) zur biologischen Behandlung von Fluiden werden aus einzelnen Füllkörperblöcken (18) gebildet. Üblicherweise werden die Füllkörperblöcke (18) im Behälter (11) zur Aufnahme des Festbettkörpers (10) zusammengesetzt. Das Arbeiten im Inneren des Behälters (11) ist recht erschwerlich.

Beim erfindungsgemäßen Verfahren wird der Festbettkörper 10 aus zusammengesetzten Festbettelementen (19) gebildet, die aus neben- und übereinanderliegenden Füllkörperblöcken (18) bestehen. Jedes Festbettelement (19) wird außerhalb des Behälters (11) auf einer horizontalen Unterlage vorgefertigt, indem eine Schicht aus neben- und hintereinander liegenden Füllkörperblöcken (18) gebildet wird. Dieses Festbettelement (19) wird anschließend mit einem Transportmittel hochgeschwenkt in eine senkrechte Erstreckungsrichtung und dann aufrecht gerichtet in den Behälter (11) eingesetzt. Durch die Vorfertigung der Festbettelemente (19) brauchen nur noch wenige Tätigkeiten im Behälter (11) stattzufinden.

## Beschreibung

Die Erfindung betrifft ein Verfahren zur Herstellung eines Festbettkörpers gemäß dem Oberbegriff des Anspruchs 1. Festbettkörper der angesprochenen Art werden überwiegend zur biologischen Behandlung von Fluiden, beispielsweise zur biologischen Abwasserreinigung, eingesetzt. Die einzelnen Festbettkörper werden gebildet aus einer Vielzahl miteinander verbundener Füllkörperblöcke. Diese Füllkörperblöcke wiederum sind üblicherweise quaderförmig, insbesondere würfelförmig, ausgebildet und setzen sich zusammen aus einer Vielzahl rasterartig zusammengesetzter Rohre. Bei den Rohren handelt es sich vorzugsweise um Kunststoffrohre mit einer netzartig strukturierten Mantelfläche, und zwar vorzugsweise Gitterrohre.

Ein oder auch mehrere Festbettkörper werden vorzugsweise auf einem Auflager in einem Becken, einem Behälter oder dergleichen zur Aufnahme der zu behandelnden Flüssigkeiten angeordnet.

Bei der Herstellung eines Festbettkörpers wird bisher so vorgegangen, daß die einzelnen Füllkörperblöcke auf dem Auflager im Behälter zusammengefügt werden, indem im wesentlichen durch entsprechendes Stapeln der Füllkörperblöcke ein Festbettkörper gebildet wird. Die so zusammengestapelten Füllkörperblöcke müssen dann noch untereinander und mit dem Auflager verbunden werden, damit sie in dem mit Flüssigkeit gefüllten Behälter nicht aufschwimmen. Die Herstellung bzw. Montage des Festbettkörpers im Behälter wird dadurch erschwert, daß die Tätigkeiten vom gitterartigen Auflager aus erfolgen müssen, und zumindest bei größtenteils fertiggestelltem Festbettkörper im Behälter eine Enge herrscht, die das Arbeiten erschwert. Ein weiterer entscheidender Nachteil der bisherigen Montage bzw. Herstellung von Festbettkörpern besteht darin, daß von übereinander gestapelten und nicht verbundenen Füllkörperblöcken eine erhöhte Unfallgefahr ausgeht, wenn nämlich obere Füllkörperblöcke vom Stapel herunterfallen.

Der Erfindung liegt das Problem zugrunde, ein Verfahren zur Herstellung eines Festbettkörpers zu schaffen, das einfach, insbesondere unter günstigen Arbeitsbedingungen und verhältnismäßig gefahrlos für die beteiligten Monteure durchführbar ist.

Ein Verfahren zur Lösung dieser Aufgabe weist die Maßnahmen des Anspruchs 1 auf. Dadurch, daß mehrere Füllkörperblöcke außerhalb des Behälters oder auch eines Beckens zusammengesetzt und als Element (Festbettelement), aus mehreren Festbettkörpern in den Behälter eingesetzt werden, lassen sich die Montagetätigkeiten für den Festbettkörper größtenteils außerhalb des Behälters oder Beckens durchführen. Im Becken oder Behälter brauchen nur noch die Festbettelemente aus einer Mehrzahl bereits sich in der endgültigen Relativanordnung zueinander befindlichen und miteinander verbundenen Füllkörperblöcken zusammengefügt zu werden. Ein Zusammensetzen, insbesondere ein Stapeln, einzelner Füllkörperblöcke innerhalb des Behälters oder Beckens ist nicht mehr erforderlich.

Gemäß einer Weiterbildung des Verfahrens wird jedes Festbettelement oder gegebenenfalls auch mehrere Festbettelemente aus zusammengesetzten Füllkörperblöcken mittels eines Transporthilfsmittels in den Behälter oder das Becken eingesetzt. Dieses Transporthilfsmittel kann mehrere Funktionen aufweisen: Zum einen dient es dazu, das Festbettelement aus mehreren zusammengesetzten Füllkörperblöcken zuverlässig und einfach mit einem Kran zum Einsetzen des Festbettelements in den Behälter zu verbinden. Zum anderen hält das Transportmittel die zum Festbettelement zusammengesetzten Füllkörperblöcke und in der vorgesehenen Position zusammen, und zwar vorzugsweise formschlüssig. Dadurch wird insbesondere während des Transports in den Behälter das Lösen einzelner Füllkörperblöcke vom Festbettelement wirksam vermieden.

Gemäß einer weiteren vorteilhaften Ausgestaltung des Verfahrens werden die Füllkörperblöcke auf einer ebenen, vorzugsweise horizontalen Unterlage außerhalb des Behälters zusammengesetzt. Die ebene, vor allem horizontale Unterlage erleichtert das Zusammensetzen der Füllkörperblöcke zum Festbettelement erheblich. Es brauchen nur die zusammenzusetzenden Füllkörperblöcke auf die Unterlage aufgelegt und in die richtige Position zueinander gebracht werden. Das kann ohne große Anstrengungen erfolgen, weil die Füllkörperblöcke auf der Unterlage nicht gestapelt zu werden brauchen und die Unterlage das Hantieren mit den Füllkörperblöcken erleichtert, die lediglich durch Drehen in die richtige Relativposition zueinander zu bringen sind.

Vorzugsweise werden die Füllkörperblöcke neben- und hintereinanderliegend zur Bildung eines Festbettelements zusammengesetzt. Dabei wird lediglich eine Ebene oder Schicht aus nur nebeneinander- und hintereinanderliegenden Füllkörpern gebildet. Vorzugsweise werden die Füllkörperblöcke in einer solchen Anzahl nebeneinander- und hintereinanderliegend angeordnet, daß damit ein Festbettelement entsteht, das dem Querschnitt durch den Festbettkörper entspricht. Dieser läßt sich auf diese Weise besonders einfach bilden, weil nur eine entsprechende Anzahl von Festbettelementen nebeneinanderliegend im Becken bzw. Behälter anzuordnen ist. Die Relativposition einzelner Füllkörperblöcke braucht daher im Behälter nicht mehr verändert zu werden. Auch ist keine Stapelung von Füllkörperblöcken mehr nötig. Es brauchen nur noch die einzelnen Festbettelemente nebeneinander im Behälter befestigt zu werden, um den entsprechenden Festbettkörper zu erhalten.

Weiterhin ist vorgesehen, die einzelnen Füllkörperblöcke des jeweiligen Festbettelements vor dem Einsetzen in den Behälter mit Befestigungsmitteln zur Verankerung der Festkörperblöcke des Festbettelements im Behälter zu versehen. Auf diese Weise kann ein wesentlicher Teil der Montagearbeit außerhalb des Behälters erfolgen. Vorzugsweise werden die Befestigungsmittel bereits dem Festbettelement zugeordnet, wenn die einzelnen Füllkörperblöcke zur Bildung desselben auf der Unterlagen in die vorgesehene Relativposition zueinander gebracht worden sind.

Gemäß einer bevorzugten Weiterbildung des Verfahrens werden die auf der vorzugsweise horizontal ausgerichteten Unterlage zum Festbettelement zusammengesetzten Füllkörperblöcke insgesamt umorrientiert, vorzugsweise aufgerichtet und dadurch das gesamte Festbettelement in eine vertikale Position gebracht, die es auch im Behälter einnimmt. Das somit in eine Vertikale geschwenkte Festbettelement wird anschließend in den Behälter eingesetzt und dort verankert, vorzugsweise mit dem Auflager unter dem herzustellenden Festbettkörper. Durch das Aufrichten des vorgefertigten Festbettelements ist es nicht erforderlich, die Füllkörperblöcke zu stapeln, und zwar weder außerhalb des Behälters auf der Unterlage noch innerhalb des Behälters. Das vereinfacht die Montage des Festbettkörpers erheblich. Insbesondere werden manuelle Arbeiten auf ein Minimum reduziert, erstrecken sich nämlich im wesentlichen nur noch auf ein Verschieben und Verdrehen der Füllkörperblöcke auf der Unterlage.

Weitere Unteransprüche betreffen vorteilhafte Weiterbildungen des Verfahrens.

Das erfindungsgemäße Verfahren wird nachfolgend anhand der Zeichnung näher erläutert. In dieser zeigen:
- Fig. 1: einen teilweisen Querschnitt durch einen Behälter mit einem darin angeordneten Festbettkörper,
- Fig. 2: eine perspektivische Ansicht eines Füllkörperblocks,
- Fig. 3: eine schematische perspektivische Darstellung eines Festbettkörpers in einem dreidimensionalen Koordinatensystem, und
- Fig. 4: eine Draufsicht auf eine Unterlage zum Zusammensetzen mehrerer Füllkörperblöcke zu einem Festbettelement.

Zur biologischen Behandlung von Fluiden, insbesondere zur biologischen Reinigung von Abwasser, dienen Festbettkörper 10. Die Festbettkörper 10 bilden eine Bewuchsfläche für einen sogenannten biologischen Rasen, der mit dem zu reinigenden Abwasser oder einer anderen Flüssigkeit bzw. einem Gas in einem den Festbettkörper 10 (oder auch mehrere) aufnehmenden Behälter oder dergleichen in Kontakt gebracht wird.

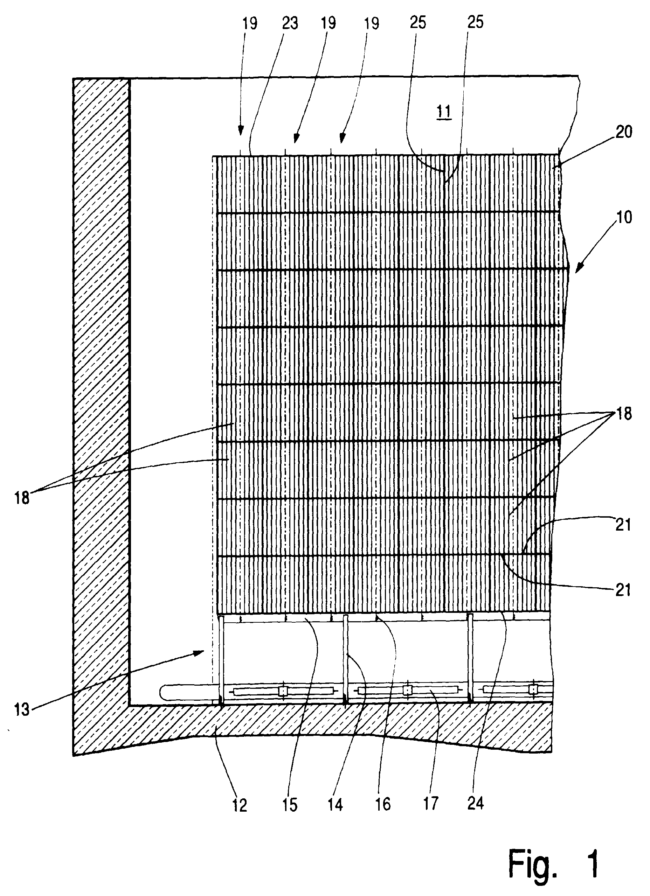

Die Fig. 1 zeigt einen Teil eines geschnittenen Behälters 11, in dem der Festbettkörper 10 angeordnet ist. Der Festbettkörper 10 ist in der Fig. 1 auch nur teilweise dargestellt. Alternativ ist es möglich, in einem Behälter 11 mehrere Festbettkörper anzuordnen. Im Ausführungsbeispiel der Fig. 1 befindet sich auf einer horizontalen Bodenplatte 12 des Behälters ein Auflager 13, das nach Art eines dreidimensionalen Rahmentragwerks ausgebildet ist. Das Auflager 13 verfügt über aufrechte Fußstreben 14, deren obere, freie Enden durch Längsstreben 15 und Querstreben 16 verbunden sind. Die Längsstreben 15 und die Querstreben 16 bilden ein horizontal gerichtetes Gitter, auf dem der Festbettkörper 10 aufliegt. Unterhalb des Festbettkörpers 10 sind im Bereich des Auflagers 13 Belüftungseinrichtungen 17 angeordnet, auf die hier nicht näher eingegangen werden soll.

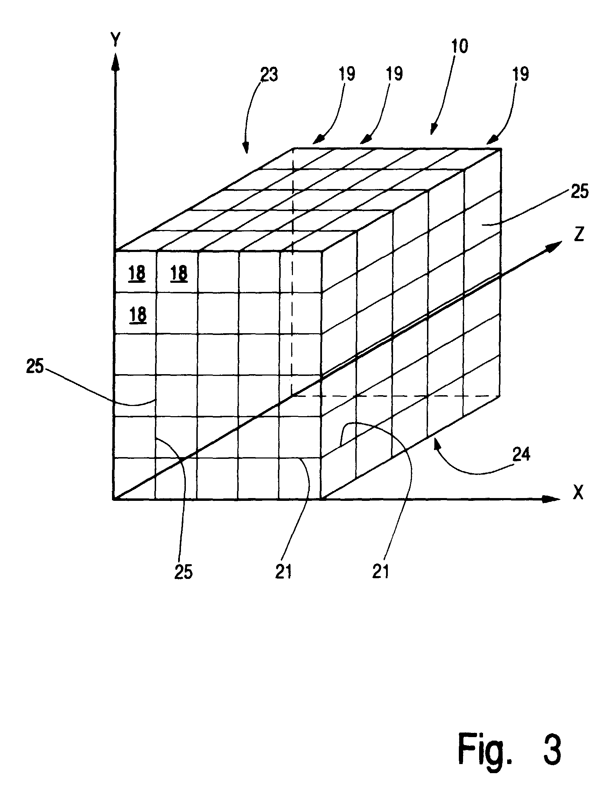

Der quaderförmige Festbettkörper 10 ist gebildet aus einer Vielzahl von untereinander gleichen Füllkörperblöcken 18. Durch ein paketartiges Stapeln mehrerer dieser gleichen Füllkörperblöcke 18 entsteht der Festbettkörper 10. Die Fig. 3 veranschaulicht schematisch (mit einer von der Fig. 1 abweichenden Anzahl von Füllkörperblöcken 18), wie die Füllkörperblöcke 18 zur Bildung des Festbettkörpers 10 angeordnet sind. Der besseren Übersicht halber soll das anhand der Fig. 3 im Zusammenhang mit einem dreidimensionalen Koordinatensystem erläutert werden. Demnach sind bezogen auf den Einbauzustand des Festbettkörpers 10 im Behälter 11 mehrere Füllkörperblöcke 18 in Richtung der X-Achse nebeneinander und in Richtung der Z-Achse hintereinander gestapelt zur Bildung einer horizontalen Stapelebene. Darüber hinaus sind mehrere Füllkörperblöcke 18 übereinander in Richtung der Y-Achse gestapelt. Die Füllkörperblöcke 18 liegen also in mehreren horizontalen Stapelebenen übereinander. In jeder Stapelebene ist die Anzahl der Füllkörperblöcke 18 gleich. In vertikaler Richtung, also in Querschnittsrichtung durch den Festbettkörper 10, bilden Füllkörperblöcke 18, die in einer Ebene bezogen auf die X-Achse in Richtung der Z-Achse hintereinander und in Richtung der Y-Achse übereinander gestapelt sind, ein Festbettelement 19. Ein solches Festbettelement 19 stellt somit eine vertikale Schicht aus nur in Richtung der Y-Achse übereinander und in Richtung der Z-Achse hintereinander angeordneten Füllkörperblöcke 18 dar. Mehrere dieser in einer senkrechten Ebene im Behälter 11 angeordneten Festbettelemente 19 sind in Richtung der X-Achse nebeneinander angeordnet. Im Ausführungsbeispiel der Fig. 3 wird jedes der eine gleiche Anzahl von Füllkörperblöcken 18 aufweisendes Festbettelement 19 gebildet durch fünf in Richtung der Z-Achse hintereinander gestapelter Füllkörperblöcke 18 und sechs in Richtung der Y-Achse übereinander gestapelter Füllkörperblöcke 18. Fünf solcher Festbettelemente 19 sind in Richtung der X-Achse direkt nebeneinander angeordnet, wobei die Festbettelemente 19 unterschiedlicher Ebenen bzw. Schichten auf der X-Achse unmittelbar aneinander anliegen wie die Füllkörperblöcke 18 jedes Festbettelements 19.

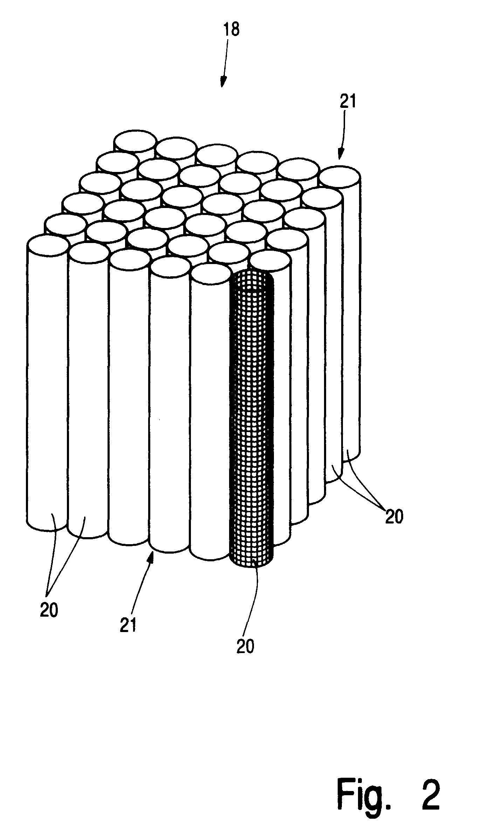

Die Fig. 2 zeigt den Aufbau eines Füllkörperblocks 18 zur Bildung des Festbettkörpers 10 bzw. jedes Festbettelements 19. Alle Füllkörperblöcke 18 des Festbettkörpers 10 und der Festbettelemente 19 verfügen über die gleich Ausbildung und die gleichen Abmessungen. Jeder würfelförmige Füllkörperblock 18 wird gebildet aus einer Vielzahl neben- und hintereinander angeordneter Rohrabschnitte, die über eine netzartige Mantelfläche und offene Stirnseiten 21 verfügen. Bei den Rohrabschnitten handelt es sich somit um Netzrohre 20. In der Fig. 2 ist aus Gründen der einfachen Darstellbarkeit nur die Netzstruktur eines Netzrohrs 20 angedeutet. Tatsächlich besteht aber der gesamte Füllkörperblock 18 aus Netzrohren 20. Diese sind gebildet aus thermoplastischem Kunststoff. Die Netzrohre 20 sind senkrecht gerichtet, also mit senkrechter Längsmittelachse reihen- und zeilenweise nebeneinanderliegend angeordnet, derart, daß benachbarte Netzrohre 20 mit ihren äußeren Mantelflächen an senkrechten Berührungslinien miteinander in Kontakt stehen, nämlich aneinander anliegen. Die Netzrohre 20 jedes Füllkörperblocks 18 sind in an sich bekannter Weise miteinander verbunden, und zwar im Bereich ihrer offenen Stirnseiten 21 und/oder an ihren Berührungslinien. Diese Verbindung kann durch Schweißen oder dergleichen erfolgen. Beim eingebauten Festbettkörper 10 sind die Füllkörperblöcke 18 allesamt derart orrientiert, daß ihre Netzrohre 20 bezüglich ihrer Längserstreckungsrichtung senkrecht verlaufen. Des weiteren sind die Füllkörperblöcke 18 beim eingebauten Festbettkörper 10 so übereinandergestapelt, daß die Netzrohre 20 benachbarter (oberer und unterer) Füllkörperblöcke 18 unmittelbar übereinander liegen und somit die Stirnseiten 21 benachbarter Netzrohre 20 aneinander anliegen und miteinander fluchten. Es entstehen so über die gesamte Höhe des Festbettkörpers 10 durchgehende Netzrohrsäulen, die abschnittsweise aus den Netzrohren 20 der übereinander gestapelten Füllkörperblöcke 18 gebildet werden.

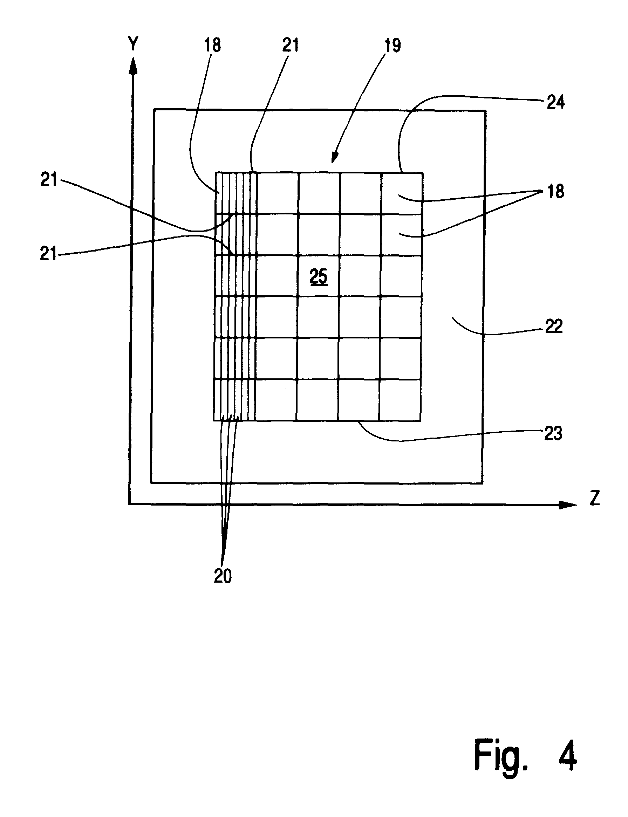

Bei der Herstellung des Festbettkörpers 10 wird so vorgegangen, daß auf einer ebenen Unterlage 22 (Fig. 4) außerhalb des Behälters 11 die Füllkörperblöcke 18 zu jeweils einem Festbettelement 19 zusammengesetzt werden. Die Unterlage 22 kann durch einen ebenen Boden gebildet sein. Bei unebenem oder unbefestigtem Untergrund kann auch eine separate, stabile Unterlage 22 verwendet werden. Vorzugsweise ist die Unterlage 22 horizontal ausgerichtet.

Das Zusammensetzen der Füllkörperblöcke 18 zur Bildung eines vorgefertigten Festbettelements 19 erfolgt auf der Unterlage 22 in einer von der eingebauten Lage des Festbettkörpers 10 im Behälter 11 abweichenden Anordnung. Die Füllkörperblöcke 18 werden nämlich allesamt liegend, nämlich mit horizontal verlaufenden Netzrohren 20, zusammengesetzt. Die Längsmittelachsen der Netzrohre 20 verlaufen somit parallel zur horizontalen Unterlage 22. Während beim im Behälter 11 eingebauten Festbettkörper 10 jedes Festbettelements 19 sich aus in Richtung der Y-Achse und der Z-Achse neben- und hintereinanderliegenden Füllkörperblöcken 18 zusammensetzt (Fig. 3), verlaufen bei der Zusammenstellung des jeweiligen Festbettelements 19 auf der Unterlage 22 die Y-Achse und die Z-Achse in der Ebene der Unterlage 22, das heißt die Y-Achse ist geschwenkt aus einer vertikalen Richtung in Bezug auf den eingebauten Festbettkörper 10 im Behälter 11 in eine horizontale Richtung beim Zusammensetzen des Festbettelements 19 auf der Unterlage 22 (Fig. 4).

Nach dem Zusammensetzen einer entsprechenden Anzahl von Füllkörperblöcken 18 in Richtung der Y-Achse und der Z-Achse auf der Unterlage 22 weisen die Füllkörperblöcke 18 eine Relativanordnung zueinander auf, die dem Festbettelement 19 entspricht. Es werden auf der Unterlage 22 also soviele Füllkörperblöcke 18 in Richtung der Y-Achse hintereinander und in Richtung der Z-Achse nebeneinander angeordnet, daß damit ein Festbettelement 19 entsteht, das dem vertikalen Querschnitt des Festbettkörpers 10 im Behälter 11 der Ebene der Y- und Z-Achse entspricht. Dabei sind die Füllkörperblöcke 18 derart zueinander ausgerichtet, daß die Längsmittelachsen aller Netzrohre 20 horizontal verlaufen und die Stirnseiten 21 ihrer Netzrohre 20 sich zueinander in Deckung befinden und somit in Richtung der Y-Achse durch das gesamte Festbettelement 19 durchgehende Netzrohrsäulen entstehen.

Nach dem Zusammensetzen der Füllkörperblöcke 18 werden diese miteiander verbunden, und zwar mit solchen Verbindungsmitteln, die nach dem Einbau der Festbettelemente 19 in dem Behälter 11 dazu dienen, die einzelnen Füllkörperblöcke 18 zusammenzuhalten und mit dem Auflager 13 im Behälter 11 zu verbinden, damit die Füllkörperblöcke 18 im zu reinigenden Wasser im Behälter 11 nicht aufschwemmen. Hierbei können Verbindungsmittel verwendet werden, wie sie aus dem deutschen Gebrauchsmuster 298 01 304 bekannt sind. Diese Verbindungsmittel sind im wesentlichen stangenförmig und erstrecken sich entweder durchgehend in Richtung der Y-Achse durch die aufeinanderfolgenden Netzrohre 20 des gesamten Festbettelements 19 oder sie befinden sich in sogenannten Zwickeln zwischen vier benachbarten Netzrohren 20 des jeweiligen Füllkörperblocks 18. Die Stangen werden auf der Stirnseite 21 der später im Behälter 11 oben liegenden Füllkörperblöcke 18 durch Schrauben und Unterlegplatten gesichert. Aus den Stirnseiten 21 der Behälter 11 unten liegenden Füllkörperblöcken 18 ragen die Stangen zunächst ohne eine Verbindung mit den Füllkörperblöcken 18 frei heraus.

Nachdem die Füllkörperblöcke 18 zu einem jeweiligen Festbettelement 19 zusammengesetzt und Befestigungsmittel durch die Festbettelemente 19 hindurchgesteckt sind, werden die Füllkörperblöcke 18 des Festbettelements 19 mit einem in den Figuren nicht gezeigten Transporthilfsmittel verbunden. Dieses Transporthilfsmittel verfügt über mindestens zwei längliche Stangen, die so bemessen sind, daß sie von einer später im Behälter 11 oben liegenden Seite 23 durch ausgewählte Netzrohre 22 der Füllkörperblöcke 18 hindurchgeschoben werden können und dabei auf der gegenüberliegenden, im Behälter 11 unten liegenden Seite 24 aus den Füllkörperblöcken 18 bzw. den Festbettelementen 19 herausragen. Diese herausragenden Enden der Stangen des Transporthilfsmittels werden mit lösbaren Auflageelementen, im einfachsten Falle Splinte, versehen, auf denen sich die Füllkörperblöcke 18 des Festbettelements 19 an der Seite 24 abstützen, wenn das Festbettelement 19 in den Behälter eingesetzt wird

Nach dem Einschieben des Transporthilfsmittels in das Festbettelement 19 verlaufen die Stangen des Transporthilfsmittels wie die Stangen zur späteren Verbindung der Füllkörperblöcke 18 untereinander und mit dem Auflager 13 horizontal.

Nachdem das Transporthilfsmittel in das Festbettelement 19 eingeschoben und hiermit verbunden ist, wird das Transporthilfsmittel mit dem Festbettelement 19 angehoben, beispielsweise durch einen Kran, und dabei das Festbettelement 19 aus der horizontalen Ebene auf der Unterlage 19 heraus aufgerichtet in eine vertikale Ebene. Das auf der Unterlage 21 vormontierte Festbettelement 19 wird also vor dem Einsezten in den Behälter 11 umorrientiert. Dabei ändern die Netzrohre 20 der Füllkörperblöcke 18 ihre beim Zusammensetzen auf der Unterlage 22 horizontale Erstreckungsrichtung in eine senkrechte Erstreckungsrichtung. Die dann unten liegende Seite 24 des Festbettelements 19 stützt sich mit den Stirnseiten 21 derjenigen Netzrohre, durch die die Stangen des Transporthilfsmittels vorher durchgeschoben worden sind, auf den lösbaren Auflagen an den unteren Enden der Stangen des Transporthilfsmittels ab.

Nach dem Aufrichten des Festbettelements 19 wird dieses mit ihrer vertikalen Ausrichtung mit senkrechter Y-Achse und horizontaler Z-Achse in den Behälter 11 eingesetzt, und zwar dann, wenn bereits ein oder mehrere auf die gleiche Weise zuvor montierte Festbettelemente 19 sich im Behälter 11 befinden in Richtung der X-Achse neben des zuletzt in den Behälter 11 eingesetzten Festbettelement 19. Im Ausführungsbeispiel der Fig. 3 sind so fünf Festbettelemente 19 nacheinander und nebeneinander liegend in den Behälter 11 eingesetzt. Im Ausführungsbeispiel der Fig. 1 mit einer größeren Anzahl von Festbettelementen 19 wird eine entsprechend große Anzahl von auf der Unterlage 22 vormontierten Festbettelementen 19 nacheinander in den Behälter 11 eingesetzt. Dies geschieht derart, daß die großflächigen, senkrechten Wandflächen 25, die bei der Montage des Festbettelements 19 auf der Unterlage 22 horizontal verlaufen, benachbarter Festbettelemente 19 aneinander liegen.

Nachdem das jeweilige Festbettelement 19 in die vorgesehene Position im Behälter 11 gebracht worden ist, werden die Stangen zum Zusammenhalten der Füllkörperblöcke 18 des Festbettelements 19 und zur Befestigung des Festbettelements 19 auf dem Auflager 13, mit demselben, nämlich den Längsstreben 15 und/oder den Querstreben 16, befestigt und anschließend die Schrauben und Unterlegscheiben der Stangen auf der obenliegenden Seite 23 des Festbettelements 19 festgeschraubt, wodurch eine Verspannung der übereinander liegenden Füllkörperblöcke 18 untereinander und mit den Längsstreben 15 und/oder Querstreben 16 des Auflagers 13 zustande kommt. Anschließend wird die untere Seite 24 des Festbettelements 19 vom Transporthilfsmittel gelöst, so daß die Stangen des Transporthilfsmittels nach oben aus dem betreffenden Festbettelements 19 herausgezogen werden können. Das Transporthilfsmittel kann dann zur Aufnahme des nächsten Festbettelements 19 dienen. Dieses wird auch als vorgefertigte Einheit mit dem Transporthilfsmittel in den Behälter 11 eingesetzt und zwar in Richtung der X-Achse neben der außenliegenden, freien Wandfläche 25 des zuvor in den Behälter 11 eingesetzten Festbettelements 19.

Zur schnellen, ermüdungsfreien und sicheren Befestigung der Stangen an dem Auflager 13 kann ein Montagewagen eingesetzt werden. Der Montagewagen ist unter den Festbettelementen 19 angeordnet, und zwar im Zwischenraum zwischen dem Auflager 13 unter den Festbettelementen 19 und der Bodenplatte 12 des Behälters. Der Montagewagen verfügt über ein Grundgestell mit Bockrollen und eine auf dem Grundgestell montierte Liegefläche. Die Liegefläche kann gegebenenfalls ausklappbare Kopf- und Fußteile aufweisen. Sie ist im wesentlichen horizontal gerichtet. Der Montagewagen ist so bemessen, daß er zwischen benachbarten aufrechten Fußstreben 14 des Auflagers 13 hindurchbewegbar ist.

Auf dem Montagewagen kann ein Monteur sich liegend unter dem Auflager 13 entlangbewegen, indem er vorzugsweise sich selbst an den senkrechten Fußstreben 14 des Auflagers 13 weiterzieht oder schiebt. Auf der Liegefläche des jeweiligen Montagewagens liegt vorzugsweise ein Monteur. Es können aber auch mehrere Monteure gleichzeitig auf der Liegefläche liegen. Der Monteur oder die Monteure können mit dem Montagewagen einfach in die jeweilige Position gelangen, in der die Stangen der Festbettelemente 19 mit dem Auflager 13 zu verbinden sind.

Der Montagevorgang ist abgeschlossen, wenn alle zur Bildung des Festbettkörpers 10 erforderlichen Festbettelemente 19 der Reihe nach auf der Unterlage 22 in der vorstehend beschriebenen Weise liegend vormontiert und in die Senkrechte aufgerichtet und in den Behälter 11 eingesetzt worden sind.

### Bezugszeichenliste:

- 10: Festbettkörper
- 11: Behälter
- 12: Bodenplatte
- 13: Auflager
- 14: Fußstrebe
- 15: Längsstrebe
- 16: Querstrebe
- 17: Belüftungseinrichtung
- 18: Füllkörperblock
- 19: Festbettelement
- 20: Netzrohr
- 21: Stirnseite
- 22: Unterlage
- 23: Seite
- 24: Seite
- 25: Wandfläche

## Patentansprüche

1. Verfahren zur Herstellung eines vorzugsweise in einem Behälter (11) oder dergleichen anzuordnenden Festbettkörpers (10) zur biologischen Behandlung von Fluiden, wobei der Festbettkörper (10) aus einer Vielzahl von vorzugsweise quaderförmigen Füllkörperblöcken (18) zusammengesetzt wird, **dadurch gekennzeichnet**, daß mehrere Füllkörperblöcke (18) außerhalb des Behälters (11) zusammengesetzt und als Einheit (Festbettelement 19) in den Behälter (11) eingesetzt werden.

2. Verfahren nach Anspruch 1, **dadurch gekennzeichnet**, daß die Einheit (Festbettelement 19) aus mehreren zusammengesetzten Füllkörperblöcken (18) mit einem Transporthilfsmittel in den Behälter (11) oder dergleichen eingesetzt wird, wobei vorzugsweise das Transporthilfsmittel die Einheit formschlüssig hält, insbesondere zusammenhält.

3. Verfahren nach einem der vorhergehenden Ansprüche, **dadurch gekennzeichnet**, daß die Füllkörperblöcke (18) auf einer ebenen, vorzugsweise horizontalen Unterlage (22) außerhalb des Behälters (11) oder dergleichen zusammengesetzt werden.

4. Verfahren nach einem der vorhergehenden Ansprüche, **dadurch gekennzeichnet**, daß auf der ebenen Unterlage (22) eine Schicht aus lediglich neben- und hintereinander liegenden Füllkörperblöcken (18) zur Bildung einer Einheit in Form eines Festbettelements (19) hergestellt wird.

5. Verfahren nach einem der vorhergehenden Ansprüche, **dadurch gekennzeichnet**, daß die Anzahl sowohl der hintereinander als auch nebeneinander liegenden Füllkörperblöcke (18) die auf der ebenen Unterlage (22) zu einem Festbettelement (19) zusammengesetzt werden, derart ist, daß die Abmessungen aller Füllkörperblöcke (18) des Festbettelements (19) die Höhe und die Tiefe oder Breite des herzustellenden Festbettkörpers (10) entspricht.

6. Verfahren nach einem der vorhergehenden Ansprüche, **dadurch gekennzeichnet**, daß mehrere vorgefertigte Festbettelemente (19) nebeneinander liegend zur Bildung des Festbettkörpers (10) im Behälter (11) angeordnet werden.

7. Verfahren nach einem der vorhergehenden Ansprüche, **dadurch gekennzeichnet**, daß die einzelnen Füllkörperblöcke (18) des jeweiligen Festbettelements (19) vor dem Einsetzen in den Behälter (11) oder dergleichen mit Befestigungsmitteln zur Verankerung des Festbettelements (19) im Behälter (11) oder dergleichen, insbesondere mit einem Auflager (13) im Behälter, versehen werden.

8. Verfahren nach einem der vorhergehenden Ansprüche, **dadurch gekennzeichnet**, daß das auf ebenen Unterlagen (22) aus einzelnen Füllkörperblöcken (18) zusammengesetzte Festbettelement (19) vor dem Einsetzen in den Behälter (11) oder während des Einsetzens in den Behälter (11) aufgerichtet wird, vorzugsweise vom Transporthilfsmittel.

9. Verfahren nach einem der vorhergehenden Ansprüche, **dadurch gekennzeichnet**, daß beim Zusammensetzen des Festbettelements (19) auf der vorzugsweise horizontalen Unterlage (22) die Füllkörperblöcke (18) mit horizontal verlaufenden Rohrabschnitten (Netzrohren 20) zusammengesetzt werden und zum Einsetzen in den Behälter (11) oder dergleichen so umorrientiert werden, daß die Längsmittelachsen der Rohrabschnitte (Netzrohre 20) der Füllkörperblöcke (18) senkrecht verlaufen.

10. Verfahren nach einem der vorhergehenden Ansprüche, **dadurch gekennzeichnet**, daß nach dem Einsetzen des jeweiligen Festbettelements (19) in den Behälter (11) oder dergleichen das Festbettelement (19) mit seinen vormontierten Befestigungsmitteln im Behälter (11) oder dergleichen verankert und anschließend das Transporthilfsmittel vom Festbettelement (19) gelöst wird.

11. Verfahren nach einem der vorhergehenden Ansprüche, **dadurch gekennzeichnet**, daß die Füllkörperblöcke (18) derart zum Festbettelement (19) zusammengesetzt werden, daß die Rohrabschnitte (Netzrohre 20) übereinander liegender Füllkörperblöcke (18) miteinander fluchten.

12. Verfahren nach einem der vorhergehenden Ansprüche, **dadurch gekennzeichnet**, daß das Transporthilfsmittel vorzugsweise mehrere Stangen aufweist, die durch bestimmte Rohrabschnitte (Netzrohre 20) in Längsrichtung aller hintereinander liegender Füllkörperblöcke (18) des Festbettelements (19) hindurchgesteckt und vorzugsweise mit lösbaren Auflagermitteln für das Festbettelement (19) versehen werden.
